# EUROPEAN PATENT SPECIFICATION

(11) **EP 1 031 264 B1**
(45) Date of publication and mention of the grant of the patent: **30.03.2005**
(21) Application number: 00200175.8
(22) Date of filing: 18.01.2000
(51) Int. Cl.: A01B 73/00, E02F 3/30, E02F 3/627

(54) **A machine to be coupled to a tractor or the like vehicle.**
Maschine zur Kupplung an einem Schlepper oder dergleichen
Machine destinée à être accouplée à un tracteur ou véhicule semblable

(30) Priority: 26.02.1999 NL 1011401
(43) Date of publication of application: 30.08.2000
(73) Proprietor: Herder B.V., 4338 PL Middelburg (NL)
(72) Inventor: Den Herder, Abraham, 4338 PL Middelburg (NL)
(74) Representative: Vollebregt, Cornelis Jacobus, Ir.

(56) References cited:
- EP-A- 0 803 615
- DE-A- 3 546 078
- FR-A- 2 743 828
- GB-A- 2 055 284
- US-A- 5 775 075

## Description

The invention relates to a machine to be coupled to a tractor or the like vehicle, comprising an articulated boom which includes at least two elongated boom parts which are adjustable with respect to each other about a horizontal pivot axis, whilst the boom is coupled with one end to a mounting bracket to be attached to the tractor or the like, in such a manner that the boom is pivotable about a vertical pivot axis as well as about a horizontal pivot axis with respect to the mounting bracket whilst an implement is coupled to the other free end of the boom by a connecting piece in such a way that said implement is adjustable with respect to the boom about a pivot axis which extends transversely to the longitudinal axis of the boom.

A machine of this kind is known from US-A-5,755,075. The implements which are used with such a machine are for example used for ditch and roadside maintenance, wherein the implement is a cutting device or a cutter basket of comparatively great length, which implement can extend transversely to the boom during operation.

In order to have a large working range, for example when clearing ditches, mowing slopes and the like, also the boom has a comparatively great length.

A problem that presents itself thereby is the transport of such a combination of a tractor and a machine coupled thereto by road. With the current machines, the dimensions of the machine, in particular the length of the boom and/or of the implement may be such that such a combination no longer falls within the legal measurements for vehicles that travel on public roads.

In order to meet this objection, the machine could be uncoupled from the tractor or the like and be transported on a trailer, but it will be apparent that there are several drawbacks connected thereto, such as the time-consuming uncoupling and subsequent coupling of the machine and the necessity to use an additional trailer or the like.

The object of the invention is to obtain a machine of the above kind, wherein the drawbacks of the machines that have been used so far can be alleviated or eliminated.

According to the invention, this objective can be accomplished in that the boom of the machine to be coupled to one side of the tractor or the like comprises three elongated boom parts which are pivotable about horizontal pivot axes with respect to each other, wherein the elongated boom part which joins the elongated boom part which is connected to the mounting bracket is pivotable with respect to said latter elongated boom part between two positions on either side of said elongated boom part.

By using a construction of this type, at least part of the boom of the machine which is coupled to a tractor or the like can be collapsed into a very compact unit which is disposed near one side of the tractor or the like.

Preferably, an elongated part of the boom to which the implement is coupled is adjustable with respect to the other elongated part of the boom about a pivot axis which crosses the horizontal pivot axis between the elongated boom parts. The elongated part of the boom that supports the implement can thereby be moved to a position in which said elongated boom part extends transversely to the longitudinal direction of the tractor, seen in top plan view of the tractor or the like, thus enabling an even further reduction of the dimensions of parts of the machine that may project beyond the circumference of the tractor.

The invention will now be explained in more detail with reference to the accompanying figures, which schematically show an embodiment of a combination of a tractor and a machine according to the invention.
Figure 1 is a rear view of a tractor and a machine coupled to one side of said tractor, showing the machine in an operative position thereof.
Figure 2 is a side view of the combination of tractor and machine in a transport position.
Figure 3 is a top plan view of figure 2.

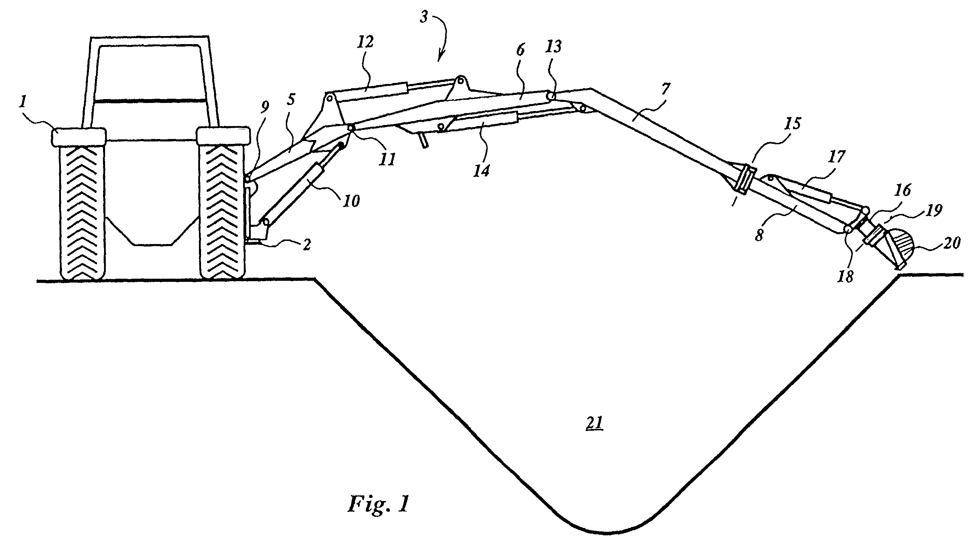

Figure 1 shows a tractor 1, to one side of which a machine 3 is coupled by means of a mounting bracket 2.

Machine 3 comprises a boom, which is built up of four boom parts 5-8. Boom part 5 is pivotally connected to the mounting bracket 2 at one end by means of a horizontally extending pivot pin 9. A setting cylinder 10 which is known per se is mounted between mounting bracket 2 and the end of boom part 5 remote from pivot pin 9 for pivoting boom part 5 and the further boom parts 6 - 8 connected thereto, which setting cylinder is positioned under boom part 5 in the operative position which is shown in Figure 1.

Boom part 6 is connected to the end of boom part 5 remote from pivot pin 9 by means of a pivot pin 11 which extends parallel to pivot pin 9. A setting cylinder 12 extending above boom part 6, seen in Figure 1, is mounted between the two boom parts 5 and 6 for pivoting boom part 6 and the boom parts 7 and 8 connected thereto with respect to boom part 5.

One end of boom part 7 is connected to the end of boom part 6 remote from boom part 5 by means of a pivot pin 13 extending parallel to pivot pins 9 and 11. A setting cylinder 14 extending under boom part 6, seen in Figure 1, is mounted between boom part 6 and boom part 7 for pivoting boom part 7 and the boom part 8 connected thereto.

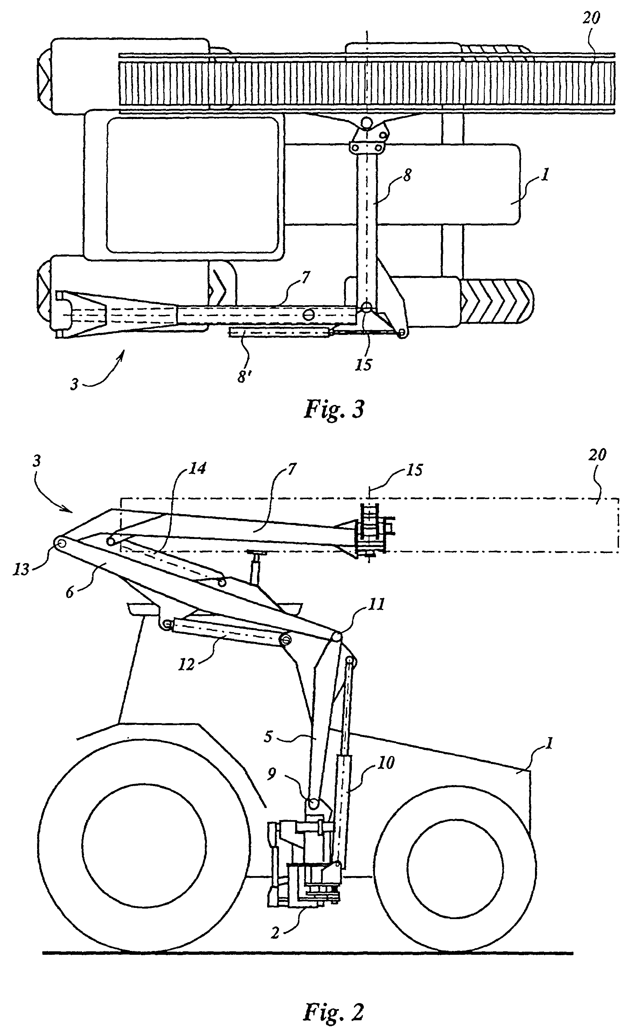

The two boom parts 7 and 8 are pivotally interconnected by means of a pivot pin 15 extending perpendicularly to the longitudinal direction of said two boom parts 7 and 8, which pivot pin 15 crosses the pivot pins 9, 11 and 13 perpendicularly. Boom part 8 can be pivoted about pivot pin 15 with respect to boom part 7 by means of a setting cylinder 8' (Figure 3), and be locked, by means not shown, against pivoting movement about pivot pin 15 in the position which is shown in Figure 1, in which the two boom parts 7 and 8 are in line, and in the position which is shown in Figures 2 and 3, in which position boom part 8 extends perpendicularly to boom part 7.

A connecting piece 16 is mounted on the free end of boom part 8, which connecting piece 16 is pivotable about a pivot pin 18 by means of a setting cylinder 17 mounted between said boom part 8 and connecting piece 16. In the operative position of the combination of tractor 1 and machine 3 which is shown in Figure 1, the setting cylinder 17 is positioned above boom part 8, whilst pivot pin 18 extends parallel to pivot pins 9, 11 and 13.

An implement 20 is coupled to said connecting piece 16 by means of a pivot pin 19 which crosses pivot pin 18 perpendicularly. In the illustrated embodiment said implement 20 is an elongated cutter basket which is known per se, which is used for clearing ditches and the like. To this end the cutter basket comprises a cutter bar extending in the longitudinal direction of the cutter basket, by means of which plants present in the ditch or the like can be cut and subsequently received in the basket. Of course it is also possible to use other implements.

It will be apparent that the cutter basket can be moved along the boundaries of a ditch or drain 21 or the like during operation by manipulating the various setting cylinders 10, 12, 14 and/or 17.

As is shown in Figures 2 and 3, the machine 3 can be pivoted for transport with respect to tractor 1 and with respect to the mounting bracket 2 attached to said tractor, to a position in which the boom part 5 connected to mounting bracket 2 extends at least substantially perpendicularly upwards and boom parts 6 and 7 extend at least substantially parallel to the longitudinal direction of tractor 1. Boom part 6 has thereby been pivoted from a position in which said boom part 6 is positioned on one side of boom part 5 in the operative position, as shown in Figure 1, to a second position in which said boom part is positioned on the other side of said boom part 5. Said pivoting of boom part 6 with respect to boom part 5 can be effected by means of setting cylinder 12. Boom part 7 has been pivoted further in the direction of boom part 6, such that the two boom parts 6 and 7 extend one above another and approximately parallel to each other, seen in the transport position.

Furthermore said boom part 8 has been pivoted through an angle of 90° with respect to boom part 7 from the operative position, in which said boom part 8 is in line with boom part 7, so that boom part 8 now extends above tractor 1, transversely to the longitudinal direction thereof. In this position the elongated implement 20, which is coupled to the end of the boom, extends at least substantially parallel to the longitudinal direction of the tractor, whilst both boom part 8 and implement 20 are positioned sufficiently high for the driver of the tractor to have a clear view during transPort of the machine.

Due to the above-described construction of the machine, which makes it possible to realise a position of the machine which is suitable for transport as described above, it is easily possible to obtain a transport position wherein the combination of tractor and machine will remain within the legal limits for road transport.

## Claims

1. A machine (3) to be coupled to a tractor (1) or the like vehicle, comprising an articulated boom (5-8) which includes at least two elongated boom parts (5, 6) which are adjustable with respect to each other about a horizontal pivot axis (11), whilst the boom is coupled with one end to a mounting bracket (2) to be attached to the tractor (1) or the like, in such a manner that the boom (5-8) is pivotable about a vertical pivot axis as well as about a horizontal pivot axis (9) with respect to the mounting bracket (2), whilst an implement (20) is coupled to the other free end of the boom, by a connecting piece (16) in such a way that said implement (20) is adjustable with respect to the boom (5-8) about a pivot axis (18) which extends transversely to the longitudinal axis of the boom (5-8), **characterized in that** the boom (5-8) of the machine (3) to be coupled to one side of the tractor (1) or the like comprises three elongated boom parts(5, 6, 7, 8) which are pivotable about horizontal pivot axes (11, 13) with respect to each other, wherein the elongated boom part (6) which joins the elongated boom part (5) which is connected to the mounting bracket (2) is pivotable with respect to said latter elongated boom part (5) between two positions on either side of said elongated boom part (5).

2. A machine (3) according to claim 1, **characterized in that** an elongated part (8) of the boom (5-8) to which the implement (20) is coupled is adjustable with respect to an other elongated part (7) of the boom about a pivot axis (15) which crosses the horizontal pivot axes (11, 13) between the boom parts (5, 6, 7, 8) .

3. A machine according to claim 1 or 2, **characterized in that** the elongated boom part (5) connected to the mounting bracket (2) can be moved to an upwardly extending position for transport, whilst the further elongated boom part (6) joining said elongated boom part (5) can be moved to a position in which said further elongated boom part (6) joins the upwardly extending elongated boom part (5) approximately perpendicularly, and a elongated third boom part (7) can be moved to a position above said further elongated boom part (6).

4. A machine according to any one of the claims 1 - 3, **characterized in that** a setting cylinder (12) is disposed above the middle one of three elongated boom parts (6, 7, 8), which setting cylinder (12) connects said middle elongated boom part (6) to the elongated boom part (5) which is connected to the mounting brackets (2), whilst a setting cylinder (14) is mounted under said middle elongated boom part (6), which extends between said middle elongated boom part (6) and an elongated boom part (7), which joins the end of said middle elongated boom part (6) remote from the end which is connected to the elongated boom part (5) that is connected to the mounting bracket (2).

## Patentansprüche

1. Maschine (3), die an einem Traktor (1) oder ähnlichem Fahrzeug ankuppelbar ist, mit einem gelenkigen Ausleger (5-8), der mindestens zwei langgestreckte Auslegerteile (5,6) beinhaltet, die mit Bezug zueinander um eine horizontale Schwenkachse (11) einstellbar sind, während der Ausleger mit einem Ende mit einem Befestigungsträger (2) verbunden ist, der an dem Traktor (1) oder dergleichen in einer Art und Weise anschließbar ist, daß der Ausleger (5-8) sowohl um eine vertikale Schwenkachse als auch um eine horizontale Schwenkachse (9) mit Bezug auf den Befestigungsträger (2) verschwenkbar ist, während ein Arbeitsgerät (20) mit dem anderen freien Ende des Auslegers durch ein Anschlußstück (16) in der Art verbunden ist, daß das Arbeitsgerät (20) mit Bezug auf den Ausleger (5-8) um eine Schwenkachse (18) verstellbar ist, die sich quer zu der Längsachse des Auslegers (5-8) erstreckt, **dadurch gekennzeichnet, daß** der Ausleger (5-8) der Maschine (3), der an einer Seite von dem Traktor (1) oder dergleichen ankuppelbar ist, drei langgestreckte Auslegerteile (5,6,7,8) umfaßt, die um horizontale Schwenkachsen (11,13) mit Bezug zueinander verschwenkbar sind, worin der langgestreckte Auslegerteil (6), der sich an dem langgestreckten Auslegerteil (5) anschließt, welcher mit dem Befestigungsträger (2) verbunden ist, mit Bezug auf den letzteren langgestreckten Auslegerteil (5) zwischen zwei Positionen auf jeder Seite des langgestreckten Auslegerteils (5) verschwenkbar ist.

2. Maschine (3) nach Anspruch 1, **dadurch gekennzeichnet, daß** ein langestreckter Teil (8) von dem Ausleger (5-8), welcher mit dem Arbeitsgerät (20) verbunden ist, mit Bezug auf einen anderen langgestreckten Teil (7) von dem Ausleger um eine Schwenkachse (15) verstellbar ist, welche die horizontalen Schwenkachsen (11,13) zwischen den Auslegerteilen (5,6,7,8) kreuzt.

3. Maschine nach Anspruch 1 oder 2, **dadurch gekennzeichnet, daß** der an dem Befestigungsträger (2) angebrachte langgestreckte Auslegerteil (5) in eine sich aufwärts erstreckende Position für den Transport bewegt werden kann, während der weitere sich an dem langgestreckten Auslegerteil (5) anschließende langgestreckte Auslegerteil (6) in eine Position gebracht werden kann, in der der weitere langgestreckte Auslegerteil (6) sich zu dem sich aufwärts erstreckenden langgestreckten Auslegerteil (5) in etwa senkrecht erstreckt, und ein langgestreckter dritter Auslegerteil (7) in eine Position oberhalb des weiteren langgestreckten Auslegerteils (6) gebracht werden kann.

4. Maschine nach einem der Ansprüche 1 bis 3, **dadurch gekennzeichnet, daß** ein Stellzylinder (12) oberhalb des mittleren der drei langgestreckten Auslegerteile (6,7,8) angeordnet ist, der Stellzylinder (12) den mittleren langgestreckten Auslegerteil (6) mit dem langgestreckten Auslegerteil (5) verbindet, der mit dem Befestigungsträger (2) verbunden ist, während ein Stellzylinder (14) unterhalb des mittleren langgestreckten Auslegeteils (6) angebracht ist, welcher sich zwischen dem mittleren langgestreckten Auslegerteil (6) und einem langgestreckten Auslegerteil (7) erstreckt, welcher sich an das Ende des mittleren langgestreckten Auslegerteils (6) abgesetzt von dem Ende anschließt, das mit dem langgestreckten Auslegerteil (5) verbunden ist, der mit dem Befestigungsträger (2) verbunden ist.

## Revendications

1. Machine (3) destinée à être couplée à un tracteur (1) ou à tout autre véhicule de ce type, comprenant une flèche articulée (5-8) qui se compose d'au moins deux parties de flèche allongées (5-6), réglables l'une par rapport à l'autre autour d'un axe de pivot horizontal (11), tandis que la flèche est couplée à l'une de ses extrémités à un support de montage (2) qui doit être fixé sur le tracteur (1) ou tout autre véhicule de ce type, de manière que la flèche (5-8) puisse pivoter autour d'un axe de pivot vertical, ainsi qu'autour d'un axe de pivot horizontal (9), par rapport au support de montage (2), tandis qu'un outil (20) est couplé à l'autre extrémité libre de la flèche, au moyen d'une pièce de raccordement (16) de manière que ledit outil (20) soit réglable par rapport à la flèche (5-8) autour de l'axe de pivot (18) qui se prolonge transversalement à l'axe longitudinal de la flèche (5-8), **caractérisée par le fait que** la flèche (5-8) de la machine (3) destinée à être couplée sur l'un des côtés du tracteur (1) ou tout autre véhicule de ce type, comprend trois éléments de flèche de forme allongée (5, 6, 7, 8), qui peuvent pivoter autour des axes de pivot horizontaux (11, 13), les uns par rapport aux autres, sur lesquels l'élément de flèche allongé (6) qui relie l'élément de flèche allongé (5) qui est raccordé au support de montage (2) peut pivoter par rapport audit élément de flèche allongé (5), entre deux positions, sur l'un ou l'autre des côtés dudit élément de flèche allongé (5).

2. Machine (3) conforme à la revendication 1, **caractérisée par le fait que** l'élément allongé (8) de la flèche (5-8) à laquelle l'outil (20) est couplé, est réglable par rapport à un autre élément allongé (7) de la flèche, autour d'un axe de pivot (15) qui traverse les axes de pivot horizontaux (11, 13) entre les éléments de flèche (5, 6, 7, 8).

3. Machine conforme à la revendication 1 ou 2, **caractérisée par le fait que** l'élément de flèche de forme allongée (5) raccordée au support de montage (2) peut être bougé dans une position allongée vers le haut pour le transport, tandis que l'autre élément de flèche allongé (6) raccordé audit élément de flèche allongé (5) peut être bougé dans une position dans laquelle ledit élément de flèche allongé (6) se raccorde à l'élément de flèche allongé (5) qui se déplie vers le haut, de façon approximativement perpendiculaire, et un troisième élément de flèche allongé (7) peut être placé dans une position au-dessus dudit élément de flèche allongé (6).

4. Machine conforme à l'une des revendications 1 à 3, **caractérisée par le fait qu'**un vérin de réglage (12) est placé au-dessus de l'élément de flèche de forme allongée du milieu, ledit vérin de réglage (12) raccordant ledit élément de flèche de forme allongée du milieu (6) à l'élément de flèche de forme allongée (5) qui est raccordé aux supports de montage (2) , tandis qu'un vérin de réglage (14) est monté sous ledit élément de flèche de forme allongée du milieu (6), qui se prolonge entre ledit élément de flèche de forme allongée du milieu (6) et un élément de flèche de forme allongée (7), qui raccorde l'extrémité dudit élément de flèche de forme allongée du milieu (6) à distance de l'extrémité qui est raccordée à l'élément de flèche de forme allongée (5) raccordée au support de montage (2).
